# EUROPÄISCHE PATENTSCHRIFT

(11) **EP 1 727 630 B1**
(45) Veröffentlichungstag und Bekanntmachung des Hinweises auf die Patenterteilung: **05.12.2007**
(21) Anmeldenummer: 04790906.4
(22) Anmeldetag: 27.10.2004
(51) Int. Cl.: B21C 47/34, B21B 39/00, B21C 47/00

(54) **HASPELTREIBER MIT TREIBERROLLEN MIT GUSSMÄNTELN**
REEL DRIVING DEVICE COMPRISING DRIVING ROLLS PROVIDED WITH A CAST ENVELOPE
DISPOSITIF D'ENTRAINEMENT D'ENROULEUSE AVEC ROULEAUX D'ENTRAINEMENT POURVUS D'UNE ENVELOPPE COULEE

(30) Priorität: 01.12.2003 DE 10356623; 30.03.2004 DE 102004016204
(43) Veröffentlichungstag der Anmeldung: 06.12.2006
(73) Patentinhaber: SMS Demag Aktiengesellschaft, 40237 Düsseldorf (DE); Walzen Irle GmbH, D-57250 Netphen (DE)
(72) Erfinder: HOLZHAUER, Thomas, 57399 Kirchhundem (DE); MÜLLER, Karl-Friedrich, 57339 Erndtebrück (DE); RASCHKE, Uwe, 35708 Haiger (DE); SASSMANNSHAUSEN, Armin, 57334 Bad Laasphe (DE); HELLENTHAL, Ludwig, 57399 Kirchhundem (DE); KRÖNERT, Wolfgang, 57072 Siegen (DE); OTTE, Werner, 97353 Wiesentheid (DE)
(74) Vertreter: Klüppel, Walter
(86) Internationale Anmeldenummer: PCT/EP2004/012129
(87) Internationale Veröffentlichungsnummer: WO 2005/061143

(56) Entgegenhaltungen:
- WO-A-02/103066
- JP-A- 54 069 522
- PATENT ABSTRACTS OF JAPAN Bd. 014, Nr. 052 (M-0928), 30. Januar 1990 (1990-01-30) -& JP 01 278906 A (NIPPON STEEL CORP; others: 01), 9. November 1989 (1989-11-09)
- PATENT ABSTRACTS OF JAPAN Bd. 004, Nr. 108 (M-024), 5. August 1980 (1980-08-05) -& JP 55 068161 A (KUBOTA LTD), 22. Mai 1980 (1980-05-22)
- PATENT ABSTRACTS OF JAPAN Bd. 007, Nr. 187 (M-236), 16. August 1983 (1983-08-16) -& JP 58 086974 A (NITSUTETSU HAADO KK), 24. Mai 1983 (1983-05-24) -& DATABASE WPI Week 1983 Derwent Publications Ltd., London, GB; AN 1983-62831K XP002318800 & JP 58 086974 A 24. Mai 1983 (1983-05-24)
- PATENT ABSTRACTS OF JAPAN Bd. 006, Nr. 090 (C-104), 27. Mai 1982 (1982-05-27) & JP 57 023049 A (DAIDO STEEL CO LTD), 6. Februar 1982 (1982-02-06)
- PATENT ABSTRACTS OF JAPAN Bd. 010, Nr. 139 (C-348), 22. Mai 1986 (1986-05-22) -& JP 61 000557 A (KUBOTA TEKKO KK), 6. Januar 1986 (1986-01-06)

## Beschreibung

Die Erfindung betrifft einen Haspeltreiber für Walzwerke mit einer oberen und einer unteren Treiberrolle.

Derartige Haspeltreiber werden in Warm- sowie in Kaltwalzwerken eingesetzt. Die untere Treiberrolle besteht aus Vollmaterial, z. B. Stahl mit einer auftragsgeschweißten Verschleißschicht, während die obere Treiberrolle als Hohlrolle aus Stahl mit auftragsgeschweißter Verschleißschicht ausgebildet ist.

Als nachteilig hat sich jedoch erwiesen, dass die Rollen Poren auf der Oberfläche des Rollenmantels aufweisen, welche in dem Walzgut zu Abdrücken führen können, dass die Verschleißschicht der Rollten nur einen kleinen Nutzbereich haben, dass das Walzband an den Rollen oft haften bleibt, und dass die auftragsgeschweißten Rollenkörper nur sehr kostenintensiv zu erstellen sind.

Durch die JP 2509293 B2 sind schon Treiberrollen bekannt geworden, die aus einem massiven Gusskörper und einer darauf im Schleudergießverfahren aufgebrachten äußeren Verschleißschicht besteht. Auch die obere Treiberrolle ist als massive Treiberrolle vorgesehen, die durch ihr hohes Gewicht kräftige und damit aufwendige Anstellantriebe benötigt.

Durch die JP-A 55068161 ist zwar bereits ein Aufschrumpfen von Schutzschichten auf eine Walze bekannt geworden, einen kompletten Walzkörper aus Guss auf eine Welle aufzuschrumpfen ist jedoch nicht nahe gelegt.

Die WO 02/103066 A1 offenbart bereits die Halterung von Walzenmänteln mittels Klemmelementen. Bei den Klemmelementen handelt es sich jedoch um Isolierkörper, die die Leitung von elektrischen Strömen und die Funkenbildung unterbilden sollen.

Der Erfindung liegt die Aufgabe zugrunde, einen Haspeltreiber mit einer unteren Treiberrolle aus Vollmaterial und einer oberen Treiberrolle als Hohlrolle bereitzustellen, dessen Treiberrollen keine Abdrücke auf dem Walzgut hinterlassen.

Diese Aufgabe wird dadurch gelöst, dass die untere Treiberrolle eine Rollenachse aus Stahl aufweist, auf die ein Gussmantel aufgeklebt und/oder aufgeschrumpft ist, und dass die obere Treiberrolle einen Gussmantel aufweist, der zwischen zwei auf einer Achse angeordneten Klemmelementen gehalten ist.

Durch die Verwendung von Gussmänteln wird erreicht, dass die Rollen an ihren mit dem Walzgut in Kontakt kommenden Oberflächen keine Poren aufweisen, so dass die Walzgutoberfläche beim Kontakt mit den Treiberrollen keine Beschädigung erfährt. Hinzu kommt, dass das Band weniger dazu neigt, am Rollenmantel haften bzw. kleben zu bleiben.

Von Vorteil ist dabei, dass der Gussmantel außen eine Arbeitsschicht aufweist. Diese Arbeitsschicht kann kostengünstig ausreichend dick im Schleudergussverfahren hergestellt werden, so dass die Rollen einen größeren Abschliffbereich und eine größere Lebensdauer besitzen.

Wird der Gussmantel aus Sphäroguss und die Arbeitsschicht aus Indefiniteguss hergestellt, so ergibt sich ein kostengünstiger Mantel, der durch den Indefiniteguss eine große Härte aufweist, und der damit eine erheblich größere Lebensdauer erreicht.

Wird die Arbeitsschicht aus Chromguss oder sogar aus Schnellstahl hergestellt, so ergeben sich gegenüber Indefiniteguss noch größere Härten und längere Lebensdauern.

Die Erfindung wird anhand einer Zeichnung näher erläutert. Dabei zeigt
- Figur 1: den Querschnitt durch eine untere Treiberrolle und
- Figur 2: den Querschnitt durch eine obere Treiberrolle.

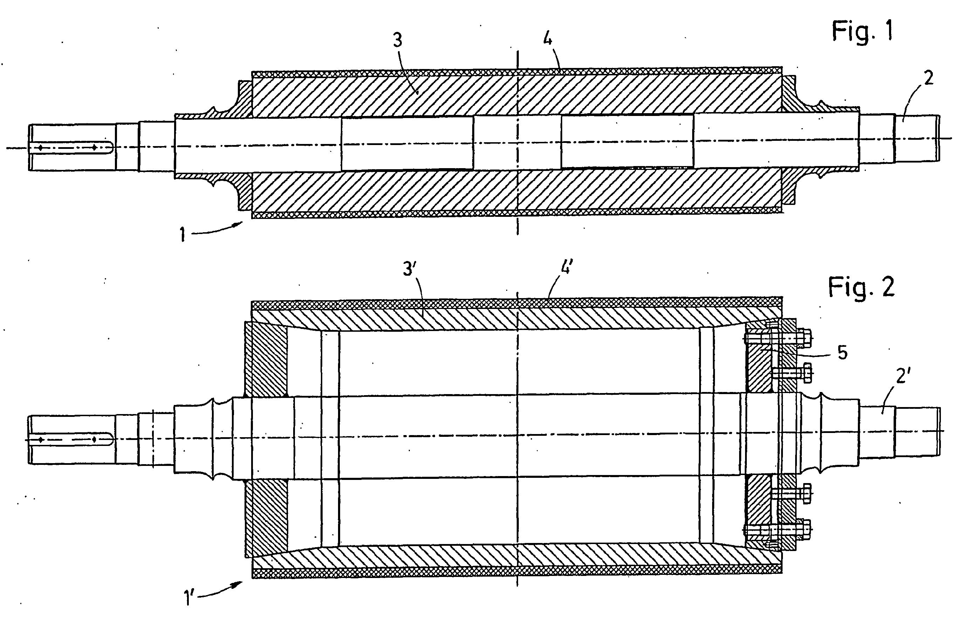

Der Figur 1 ist eine untere Treiberrolle 1 zu entnehmen, die eine Rollenachse 2 aus Stahl aufweist, auf die ein Gussmantel 3 aufgeklebt und/oder aufgeschrumpft ist. Der Gussmantel 3 wird im Schleudergussverfahren hergestellt. Er weist am Außenumfang eine verschleißbeständige Arbeitsschicht 4 auf.

Die Figur 2 zeigt eine obere Treiberrolle 1' mit einer Rollenachse 2'. Auf der Rollenachse 2' ist ein Gussmantel 3' durch zwei Klemm-Elemente 5 geklemmt. Die äußere Schicht des Gussmantels 3' wird von einer im Schleudergussverfahren hergestellten verschleißbeständigen Arbeitsschicht 4' gebildet.

### Bezugszeichenliste

- 1.: untere Treiberrolle
- 1': obere Treiberrolle
- 2.: Rollenachse
- 3.: Gussmantel
- 4.: Arbeitsschicht
- 5.: Klemm-Elemente

## Patentansprüche

1. Haspeltreiber für Walzwerke mit einer oberen und einer unteren Treiberrolle,
**dadurch gekennzeichnet,**
**dass** die untere Treiberrolle(1) eine Rollenachse (2) aus Stahl aufweist, auf die ein Gussmantel (3) aufgeklebt und/oder aufgeschrumpft ist, und
**dass** die obere Treiberrolle (1') einen Gussmantel (3') aufweist, der zwischen zwei auf einer Achse (2') angeordneten Klemmelementen (5) gehalten ist.

2. Haspeltreiber nach Anspruch 1,
**dadurch gekennzeichnet,**
**dass** der Gussmantel (3, 3') aus Sphäroguss besteht und außen eine Arbeitsschicht (4, 4') aufweist, die im Schleudergussverfahren hergestellt ist.

3. Haspeltreiber nach Anspruch 2,
**dadurch gekennzeichnet,**
**dass** der Sphäroguss aus 2,5 - 4,0 Volumen% C, 1,0 - 4,0 Volumen% Si, 0,2 - 2,0 Volumen% Mn, < 0,10 Volumen% P, < 0,05 Volumen%S, < 1,0 Volumen% Cr, < 5,0 Volumen%Ni, < 3,0 Volumen% Mo, < 1,0 Volumen% Al und < 5,0 Volumen% Cu besteht

4. Haspeltreiber nach einem der Ansprüche 2 bis 3,
**dadurch gekennzeichnet,**
**dass** die Arbeitsschicht (4, 4') aus Indefiniteguss besteht.

5. Haspeltreiber nach Anspruch 4,
**dadurch gekennzeichnet,**
**dass** der Indefiniteguss aus 2,7 - 3,8 Volumen% C, 0,5 - 2,0 Volumen% Si, 0,3 -1,5 Volumen% Mn, < 0,15 Volumen% P, < 0,10 Volumen% S, 1,0 - 3,5 Volumen% Cr, 1,0 - 5,0 Volumen% Ni, 0,1 - 0,8 Volumen% Mo, 0,010 - 0,5 Volumen% Al und 0,5 - 5,0 Volumen% Cu besteht.

6. Haspeltreiber nach Anspruch 2 oder 3,
**dadurch gekennzeichnet,**
**dass** die Arbeitsschicht (4, 4') aus Indefiniteguss mit Sonderkarbiden besteht.

7. Haspeltreiber nach Anspruch 6,
**dadurch gekennzeichnet,**
**dass** der Indefiniteguss mit Sonderkarbiden aus 2,7 - 3,8 Volumen% C, 0,5 - 2,0 Volumen% Si, 0,3 - 1,5 Volumen% Mn, < 0,15 Volumen% P, < 0,10 Volumen% S, 1,0 - 3,5 Volumen% Cr, 1,0 - 5,0 Volumen% Ni, 0,1 - 0,8 Volumen% Mo, 0,010 - 0,5 Volumen% Al, 0,5 - 5,0 Volumen% Cu, 0,5 - 4,0 Volumen% V, 0,5 - 5,0 Volumen% Nb und 0,5 - 5,0 Volumen Ta besteht.

8. Haspeltreiber nach Anspruch 2 oder 3,
**dadurch gekennzeichnet,**
**dass** die Arbeitsschicht (4,4') aus Chromguss besteht.

9. Haspeltreiber nach Anspruch 8,
**dadurch gekennzeichnet,**
**dass** der Chromguss aus 0,8 - 3,5 Volumen% C, 0,5 - 2,0 Volumen% Si, 0,4 - 3,0 Volumen% Mn, < 0,15 Volumen% P, < 0,10 Volumen% S, 8 - 35 Volumen% Cr, 0,5 - 4,0 Volumen% Ni, 0,1 - 5 Volumen% Mo, 0,5 - 5,0 Volumen% Cu, 0,5 - 4,0 Volumen% V, 0,5 - 5,0 Volumen% Nb und 0,5 - 5,0 Volumen Ta besteht.

10. Haspeltreiber nach Anspruch 2 oder 3,
**dadurch gekennzeichnet,**
**dass** die Arbeitsschicht (4, 4') aus Schnellstahl (HSS) besteht.

11. Haspeltreiber nach Anspruch 10,
**dadurch gekennzeichnet,**
**dass** der Schnellstahl aus 0,5 - 3,0 Volumen% C, 0,5 - 2,0 Volumen% Si, 0,4 - 3,0 Volumen% Mn, < 0,15 Volumen% P, < 0,10 Volumen% S, 2 - 10 Volumen% Cr, 0,5 - 4,0 Volumen% Ni, 2 - 10 Volumen% Mo, 0,5 - 5,0 Volumen% Cu, 2 -10 Volumen% V und 1 -15 Volumen% W besteht.

## Claims

1. Coiler drive for rolling mills with an upper and a lower drive roller, **characterised in that** the lower drive roller (1) has a roller axle (2) of steel, on which a cast casing (3) is glued and/or shrink-fitted, and that the upper drive roller (1') has a cast casing (3') which is held between two clamping elements (5) arranged on an axle (2').

2. Coiler drive according to claim 1, **characterised in that** the cast casing (3, 3') consists of ductile cast iron and has at the outside a working layer (4, 4'), which is produced in a centrifugal casting process.

3. Coiler drive according to claim 2, **characterised in that** the ductile cast iron consists of 2.5 to 4.0 volume % of C, 1.0 to 4.0 volume % of Si, 0.2 to 2.0 volume % of Mn, less than 0.10 volume % of P, less than 0.05 volume % of S, less than 1.0 volume % of Cr, less than 5.0 volume % of Ni, less than 3.0 volume % of Mo, less than 1.0 volume % of Al and less than 5.0 volume % of Cu.

4. Coiler drive according to one of claims 2 and 3, **characterised in that** the working layer (4, 4') consists of indefinite cast iron.

5. Coiler drive according to claim 4, **characterised in that** the indefinite cast iron consists of 2.7 to 3.8 volume % of C, 0.5 to 2.0 volume % of Si, 0.3 to 1.5 volume % of Mn, less than 0.15 volume % of P, less than 0.10 volume % of S, 1.0 to 3.5 volume % of Cr, 1.0 to 5.0 volume % of Ni, 0.1 to 0.8 volume % of Mo, 0.010 to 0.5 volume % of Al and 0.5 to 5.0 volume % of Cu.

6. Coiler drive according to claim 2 or 3, **characterised in that** the working layer (4, 4') consists of indefinite cast iron with special carbides.

7. Coiler drive according to claim 6, **characterised in that** the indefinite cast iron with special carbides consists of 2.7 to 3.8 volume % of C, 0.5 to 2.0 volume % of Si, 0.3 to 1.5 volume % of Mn, less than 0.15 volume % of P, less than 0.10 volume % of S, 1.0 to 3.5 volume % of Cr, 1.0 to 5.0 volume % of Ni, 0.1 to 0.8 volume % of Mo, 0.010 to 0.5 volume % of Al, 0.5 to 5.0 volume % of Cu, 0.5 to 4.0 volume % of V, 0.5 to 5.0 volume % of Nb and 0.5 to 5.0 volume % of Ta.

8. Coiler drive according to claim 2 or 3, **characterised in that** the working layer (4, 4') consists of chromium alloy cast iron.

9. Coiler drive according to claim 8, **characterised in that** the chromium alloy cast iron consists of 0.8 to 3.5 volume % of C, 0.5 to 2.0 volume % of Si, 0.4 to 3.0 volume % of Mn, up to 0.15 volume % of P, up to 0.10 volume % of S, 8 to 35 volume % of Cr, 0.5 to 4.0 volume % of Ni, 0.1 to 5 volume % of Mo, 0.5 to 5.0 volume % of Cu, 0.5 to 4.0 volume % of V, 0.5 to 5.0 volume % of Nb and 0.5 to 5.0 volume % of Ta.

10. Coiler drive according to claim 2 or 3, **characterised in that** the working layer (4, 4') consists of high-speed steel (HSS).

11. Coiler drive according to claim 10, **characterised in that** the high-speed steel consists of 0.5 to 3.0 volume % of C, 0.5 to 2.0 volume % of Si, 0.4 to 3.0 volume % of Mn, up to 0.15 volume % of P, up to 0.10 volume % of S, 2 to 10 volume % of Cr, 0.5 to 4.0 volume % of Ni, 2 to 10 volume % of Mo, 0.5 to 5.0 volume % of Cu, 2 to 10 volume % of V and 1 to 15 volume % of W.

## Revendications

1. Dispositif d'entraînement de bobineuse pour laminoirs avec un rouleau d'entraînement supérieur et un rouleau d'entraînement inférieur, **caractérisé**
**en ce que** le rouleau d'entraînement inférieur (1) présente un axe de rouleau (2) en acier, sur lequel est collé et/ou fretté une enveloppe en fonte (3) et en ce que le rouleau d'entraînement supérieur (1') présente une enveloppe en fonte (3') qui est maintenue entre deux éléments de serrage (5) disposés sur un axe (2').

2. Dispositif d'entraînement de bobineuse selon la revendication 1, **caractérisé**
**en ce que** l'enveloppe en fonte (3,3') est en fonte à graphite sphéroïdal et présente à l'extérieur une couche de travail (4, 4e) qui est réalisée dans un procédé de coulée par centrifugation.

3. Dispositif d'entraînement de bobineuse selon la revendication 2, **caractérisé**
**en ce que** la fonte à graphite sphéroïdal est constituée par 2,5-4,0% en volume de C, 1,0-4,0% en volume de Si, 0,2-2,0% en volume de Mn, < 0,10% en volume de P, < 0,05% en volume de S, < 1,0% en volume de Cr, < 5,0% en volume de Ni, < 3,0% en volume de Mo, < 1,0% en volume d'Al et < 5,0% en volume de Cu.

4. Dispositif d'entraînement de bobineuse selon l'une quelconque des revendications 2 à 3, **caractérisé**
**en ce que** la couche de travail (4, 4') est en fonte à trempe indéfinie.

5. Dispositif d'entraînement de bobineuse selon la revendication 4, **caractérisé**
**en ce que** la fonte à trempe indéfinie est constituée par 2,7-3,8% en volume de C, 0,5-2,0% en volume de Si, 0,3-1,5% en volume de Mn, < 0,15% en volume de P, < 0,10% en volume de S, 1,0-3,5% en volume de Cr, 1,0-5,0% en volume de Ni, 0,1-0,8% en volume de Mo, 0,010-0,5% en volume d'Al et 0,5-5,0% en volume de Cu.

6. Dispositif d'entraînement de bobineuse selon la revendication 2 ou 3, **caractérisé**
**en ce que** la couche de travail (4, 4') est en fonte à trempe indéfinie avec des carbures particuliers.

7. Dispositif d'entraînement de bobineuse selon la revendication 6, **caractérisé**
**en ce que** la fonte à trempe indéfinie avec des carbures particuliers est constituée par 2,7-3,8% en volume de C, 0,5-2,0% en volume de Si, 0,3-1,5% en volume de Mn, < 0,15% en volume de P, < 0,10% en volume de S, 1,0-3,5% en volume de Cr, 1,0-5,0% en volume de Ni, 0,1-0,8% en volume de Mo, 0,010-0,5% en volume d'Al, 0,5-5,0% en volume de Cu, 0,5-4,0% en volume de V, 0,5-5,0% en volume de Nb et 0,5-5,0% en volume de Ta.

8. Dispositif d'entraînement de bobineuse selon la revendication 2 ou 3, **caractérisé**
**en ce que** la couche de travail (4, 4') est en fonte au chrome.

9. Dispositif d'entraînement de bobineuse selon la revendication 8, **caractérisé**
**en ce que** la fonte au chrome est constituée par 0,8-3,5% en volume de C, 0,5-2,0% en volume de Si, 0,4-3,0% en volume de Mn, < 0,15% en volume de P, < 0,10% en volume de S, 8-35% en volume de Cr, 0,5-4,0% en volume de Ni, 0,1-5% en volume de Mo, 0,5-5,0% en volume de Cu, 0,5-4,0% en volume de V, 0,5-5,0% en volume de Nb et 0,5-5,0% en volume de Ta.

10. Dispositif d'entraînement de bobineuse selon la revendication 2 ou 3, **caractérisé**
**en ce que** la couche de travail (4, 4') est en acier rapide (HSS).

11. Dispositif d'entraînement de bobineuse selon la revendication 10, **caractérisé**
**en ce que** l'acier rapide est constitué par 0,5-3,0% en volume de C, 0,5-2,0% en volume de Si, 0,4-3,0% en volume de Mn, < 0,15% en volume de P, < 0,10% en volume de S, 2-10% en volume de Cr, 0,5-4,0% en volume de Ni, 2-10% en volume de Mo, 0,5-5,0% en volume de Cu, 2-10% en volume de V et 1-15% en volume de W.
